(19) Europäisches Patentamt
European Patent Office
Office européen des brevets

(11)  **EP 0 916 965 B1**

(12)  **FASCICULE DE BREVET EUROPEEN**

(45) Date de publication et mention
de la délivrance du brevet:
**01.08.2007 Bulletin 2007/31**

(51) Int Cl.:
*G01S 7/28* *(2006.01)*     *G01S 7/285* *(2006.01)*

(21) Numéro de dépôt: **98402787.0**

(22) Date de dépôt: **10.11.1998**

(54) **Procédé d'attenuation du fouillis issu des lobes de reflexion d'une antenne radar**

Verfahren zur Störungsabschwächung der Reflektionsstrahlungskeulen einer Radarantenne

Method for reducing the clutter arising from the reflection lobes of a radar antenna

(84) Etats contractants désignés:
**DE FR GB IT**

(30) Priorité: **12.11.1997 FR 9714162**

(43) Date de publication de la demande:
**19.05.1999 Bulletin 1999/20**

(73) Titulaire: **Thales**
**75008 Paris (FR)**

(72) Inventeurs:
• **Lupinski, Ludovic**
**94117 Arcueil Cédex (FR)**
• **Regnier, Bertrand**
**94117 Arcueil Cédex (FR)**

(74) Mandataire: **Chaverneff, Vladimir et al**
**Marks & Clerk France**
**31-33 Avenue Aristide Briand**
**94117 Arcueil Cédex (FR)**

(56) Documents cités:
**US-A- 5 163 176        US-A- 5 506 586**

• **ABE K ET AL: "RADAR SIDELOBE CANCELLER CHARACTERISTICS IN HIGH POWER INTERFERENCE" IEICE TRANSACTIONS ON COMMUNICATIONS, vol. E78-B, no. 11, 1 novembre 1995, pages 1507-1512, XP000555378**
• **YUEN S M: "ALGORITHMIC, ARCHITECTURAL, AND BEAM PATTERN ISSUES OF SIDELOBE CANCELLATION" IEEE TRANSACTIONS ON AEROSPACE AND ELECTRONIC SYSTEMS, vol. 25, no. 4, juillet 1989, pages 459-471, XP000047590**

**Description**

La présente invention se rapporte à un procédé d'atténuation du fouillis issu des lobes de réflexion d'une antenne radar.

On sait que le fouillis de sol capté par les lobes de réflexion pollue quelques zones du domaine ambigu distance-fréquence d'un radar. En particulier, les lobes de réflexion du radôme d'une antenne radar peuvent « éclairer » le sol au-dessus duquel est disposée l'antenne. Ces lobes de réflexion captent donc le fouillis de sol, qui parasite le signal reçu par l'antenne. Afin de diminuer les effets défavorables de ce fouillis, et diminuer le taux de fausses alarmes, on a généralement recours à la désensibilisation du radar sur les zones ainsi polluées, ce qui a pour conséquence de diminuer la distance de détection des cibles.

Le brevet US 5 163 176 décrit, pour une antenne SAR (Synthetic Aperture Radar) un système pour compenser les erreurs de détection produites par le radôme protégeant l'antenne.

Le brevet US 5 506 586 décrit un système de filtrage multivoie, notamment pour un système radar.

La présente invention (décrite dans la revendication 1) a pour objet un procédé d'atténuation de fouillis dû aux lobes de réflexion d'une antenne radar comportant une antenne principale et au moins une antenne dite « ancillaire » (non principale), procédé qui permette d'améliorer la détection de cibles dans les zones polluées par nette diminution du fouillis, sans perturber les mesures angulaires.

Le procédé conforme à l'invention consiste à déterminer la position du centre de phase de chaque voie ancillaire, ainsi que la position des centres de phase locaux de chaque zone angulaire du lobe de réflexion, à modéliser ou à mémoriser ces positions, puis à compenser, dans le domaine ambigu distance/fréquence Doppler, pour chaque voie de calcul traitée, et pour chaque voie ancillaire, la différence de chemin optique entre la voie ancillaire et la voie traitée, et à générer une voie synthétique par un traitement de type OLS en effectuant une soustraction cohérente entre les signaux de la voie traitée et ceux de la voie ancillaire sur la zone du domaine ambigu distance/fréquence Doppler de chacune des voies traitées. De préférence, la compensation et la soustraction cohérente s'effectuent dans la zone désensibilisée des domaines ambigus considérés.

La présente invention sera mieux comprise à la lecture de la description détaillée d'un exemple de mise en oeuvre, pris à titre d'exemple non limitatif et illustré par le dessin annexé, sur lequel :

- la figure 1 est un schéma montrant, pour un radar aéroporté sous radôme, le chemin optique à compenser par le procédé de l'invention à cause d'une réflexion sur le radôme,
- les figures 2 et 3 sont des schémas montrant, pour le radar de la figure 1, les paramètres utilisés par le procédé de l'invention, et
- la figure 4 est un diagramme schématique d'une voie ancillaire utilisée par le procédé de l'invention.

L'invention est décrite ci-dessous en référence à un radar de tir aéroporté, mais il est bien entendu qu'elle n'est pas limitée à cette seule application, et qu'elle peut être mise en oeuvre dans d'autres types de radars dont le signal de réception peut être affecté de fouillis reçu par des lobes de réflexion, quelle que soit la cause de ce fouillis.

Les radars de conduite de tir aéroportés, dans lesquels a été étudiée l'invention, sont du type Doppler à moyenne fréquence de récurrence. Ils comportent généralement une antenne principale et au moins une antenne ancillaire (c'est-à-dire une antenne autre que l'antenne principale).

Les antennes équipant un radar de ce type sont protégées mécaniquement par un radôme en matériau diélectrique. Leurs lobes de réflexion captent divers signaux parasites. Les lobes de réflexion se réfléchissant sur le radôme captent en particulier du fouillis du sol, qui perturbe fortement le signal reçu. Pour diminuer l'effet de ces perturbations, et ne pas trop limiter la portée du radar, on agit directement sur le radôme afin d'en diminuer l'effet réfléchissant. Sa paroi peut alors soit être une paroi monolithe réalisée en matériau peu réfléchissant dont l'indice diélectrique est le plus proche possible de celui de l'air, soit être une paroi multicouche composée de plusieurs couches de matériaux différents, solution permettant de réduire les réflexions, mais plus onéreuse que la précédente. Toutefois, ces techniques de réalisation du radôme ont une efficacité limitée à cause des contraintes imposées aux matériels aéroportés, qui restreignent le choix des matériaux utilisables, ce qui ne permet pas de résoudre le problème des perturbations créées par le fouillis et qui peuvent être très gênantes.

Le procédé de l'invention vise à réduire fortement les signaux parasites captés par les lobes de réflexion. A cet effet, il met en oeuvre un traitement spatio-temporel, qui présente certaines similitudes avec un traitement de type OLS (Opposition des Lobes Secondaires), modifié de la façon décrite ci-dessous.

L'OLS est une technique bien connue de l'homme de l'art, utilisée pour supprimer la gêne occasionnée par des brouilleurs à bruit dont l'émission, issue d'une source localisée, est reçue par les lobes diffus d'une antenne radar.

Le procédé de l'invention vise à traiter le fouillis de sol, qui est une pollution issue de toute une zone angulaire. Il met en oeuvre une propriété physique courante des lobes de réflexion, qui permet de définir un centre de phase local par zone angulaire d'un lobe de réflexion. Ce procédé peut être mis en oeuvre pour toutes les voies utiles à traiter (voies somme et voies différence), et a recours aux voies ancillaires du radar qu'il exploite en tant que voies auxiliaires de calcul. Ces voies ancillaires sont celles d'antennes ancillaires distinctes de l'antenne principale et qui peuvent être positionnées de manière quelconque par rapport à cette dernière.

Le procédé de l'invention consiste, dans un premier temps, à déterminer la position des centres de phase locaux du ou des lobes de réflexion et celle des centres de phase de la ou des voies ancillaires à partir de la mesure de leur diagramme de rayonnement. Ces positions sont ensuite mémorisées ou modélisées.

En général, l'existence du centre de phase d'un lobe de réflexion n'est pas assurée sur l'ensemble du domaine angulaire de ce lobe. Elle ne l'est que sur des zones angulaires réduites. Pour le traitement spatial de l'invention, il faut et il suffit d'un centre de phase défini localement pour chaque zone angulaire principale, correspondant à une case de résolution (distance/fréquence). Le centre de phase local (R) est alors défini par l'équation suivante :

$$\forall v,\ w \in \Omega' : \phi(v,w) - \frac{2\pi}{\lambda}\ \vec{OR}.\vec{n} = \text{constante}$$

Dans cette équation, on a :

$\Omega'$: zone angulaire du lobe de réflexion correspondant à une case de résolution

0 : origine de la mesure du diagramme en phase

$\phi$ (v, w) : phase du diagramme dans le lobe de réflexion sur le radôme.

$\vec{n}$ = (u, v, w) : cosinus directeur définissant un point du diagramme de rayonnement.

Le centre R peut être calculé par la méthode des moindres carrés, qui consiste à minimiser la fonction suivante :

$$\sum(v,w) \in \Omega' \left\| \phi(v,w) \frac{-2\pi}{\lambda}\ O\bar{R}.\bar{n} - \text{Constante} \right\|^2$$

La précision requise sur la position du centre local R est faible vis-à-vis de la longueur d'onde, car l'estimation des coefficients $W_i$ (coefficients adaptatifs mentionnés ci-dessous dans l'étape de formation d'une voie synthétique) est effectuée localement sur une zone angulaire équivalente de quelques degrés pour les résolutions usuelles des modes radar, à savoir une résolution en distance de quelques dizaines de mètres et une résolution en fréquence de quelques centaines de Hertz.

Si l'on utilise un mode à haute résolution, on peut soit augmenter la performance du traitement, soit diminuer la précision de localisation des centres de phase.

On notera que le caractère local du calcul des coefficients $W_i$ assure la robustesse du traitement et en améliore les performances.

De même, on détermine le centre de phase d'une voie ancillaire à partir de la mesure de son diagramme de rayonnement.

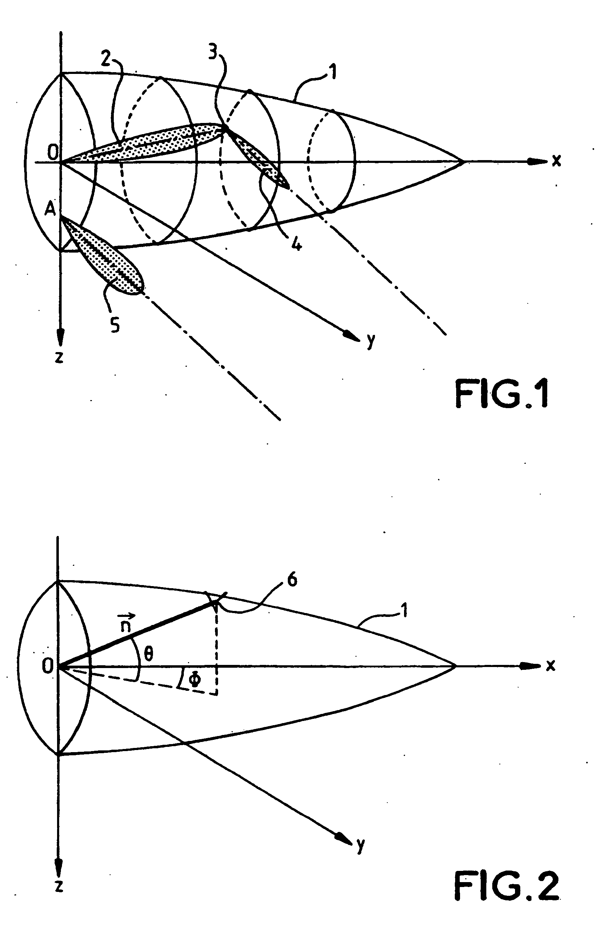

L'étape suivante du procédé de l'invention consiste, pour chaque voie ancillaire, à compenser la différence de chemin optique entre la voie ancillaire considérée et la voie traitée (voie somme ou différence). Cette différence de chemin est celle rencontrée entre les différentes directions de la zone angulaire du lobe de réflexion sur le radôme de l'antenne. On a illustré en figure 1, de façon schématique cette différence de chemin.

Sur la figure 1, on a représenté le radôme 1, présentant une symétrie de révolution autour d'un axe Ox qui est parallèle à l'axe longitudinal de l'avion porteur, et qui est aussi l'axe de l'antenne principale (non représentée) disposée dans le radôme 1, l'origine 0 étant dans le plan de l'antenne principale. On a également représenté sur la figure l'axe Oy, perpendiculaire à Ox et parallèle aux ailes de l'avion, ainsi que l'axe Oz dirigé vers le sol et perpendiculaire au plan des axes Ox et Oy lorsque l'avion est en vol horizontal. On a représenté en 2 un lobe de l'antenne principale, partant de l'origine 0 et dirigé vers le radôme 1. Ce lobe 2 se réfléchit en 3 sur le radôme et produit un lobe de réflexion 4 dirigé vers le sol. On a également représenté en A la source d'une antenne ancillaire disposée sous l'antenne principale, et en 5 un lobe de cette antenne ancillaire. Une étape du procédé de l'invention consiste à compenser la différence de chemin optique retour entre le lobe de réflexion de la voie traitée (du chemin indirect 2-4 passant par le point 3) et de la voie ancillaire (chemin direct par 5). Cette compensation consiste à « déplacer » le centre de phase de chaque voie ancillaire (ou de l'unique voie ancillaire, selon le cas) pour le faire coïncider avec le centre de phase du lobe de réflexion, selon la formule suivante :

$$\phi\,(\vec{n}) = 2\pi\,\frac{A\vec{R}.\vec{n}}{\lambda}$$

avec :

A : position du centre de phase du diagramme de rayonnement de l'antenne ancillaire,

R : position du centre de phase du lobe de réflexion sur le radôme,

λ: longueur d'onde utilisée

$\vec{n}$=(*u, v, w*): cosinus directeur définissant un point des diagrammes de rayonnement de l'antenne ancillaire et de la voie traitée, dans un repère commun.

On a représenté sur la figure 2 un exemple de repère commun pour lequel la formule de compensation indiquée ci-dessus s'applique. Sur cette figure 2, on a repris les données de la figure 1 (radôme 1, axes Ox, Oy et Oz). Soit un point 6 sur le radôme 1. Le vecteur joignant le point 6 au point O (origine commune des axes Ox, Oy, Oz) est appelé $\vec{n}$, le point 6 étant également un point situé sur une sphère ayant un rayon égal à l'unité (sphère normalisée, pour simplifier les calculs). Soit θ l'angle d'élévation du point 6 et φ son angle d'azimut. Dans la formule de compensation ci-dessus, on a alors, pour le présent exemple:

$$u = \cos\theta\,\cos\phi$$

$$v = \cos\theta\,\sin\phi$$

$$w = -\sin\theta$$

La compensation exposée ci-dessus s'applique également dans le domaine ambigu distance-fréquence. A chaque case (distance-fréquence) d'une voie ancillaire, on soustrait $\phi(\vec{n})$, $\vec{n}$ étant la direction du diagramme de rayonnement correspondant à la case distance-fréquence considérée. Le calcul de correspondance case (distance-fréquence) ↔ $\vec{n}$ est une étape usuelle d'un calcul de fouillis synthétique, calcul connu de l'homme de l'art.

La correspondance précitée n'est généralement pas bijective, à cause des repliements de spectre en distance ou en fréquence. En effet, à une case (distance-fréquence) correspondent plusieurs directions. Pour cette raison, l'invention prévoit de faire correspondre la direction principale, c'est-à-dire la direction pour laquelle le niveau de fouillis est, a priori, le plus fort. Cette direction est définie par la plus courte distance entre l'avion porteur et le sol.

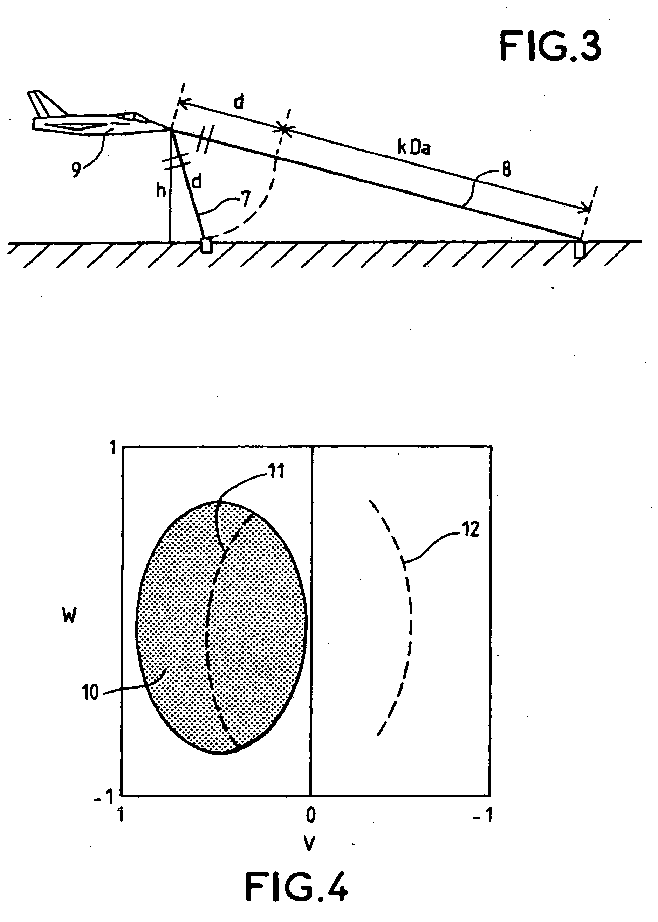

On a illustré en figure 3 cette correspondance, sur l'axe des distances, entre la direction principale et une case (distance-fréquence) du domaine ambigu (Distance-Fréquence Doppler). Sur cette figure 3, la référence 7 désigne la direction principale, et la référence 8 désigne une des directions ambiguës. La référence h désigne l'altitude de l'avion porteur 9, la référence d désigne la distance dans le domaine ambigu (Distance, Fréquence Doppler) selon la direction 7, Da la distance ambiguë (selon la direction 8), et k est un nombre entier. L'invention est donc particulièrement applicable aux modes radar présentant peu d'ambiguïté vis-à-vis du fouillis, à savoir les modes Moyenne Fréquence de Récurrence (M.F.R.), par exemple une fréquence de récurrence comprise entre 10 et 80 kHz environ.

La dernière étape du procédé de l'invention consiste à générer, pour chaque case distance-fréquence affectée par le fouillis des lobes de réflexion dans le domaine ambigu distance-fréquence Doppler, une voie synthétique par un traitement de type OLS, qui effectue une soustraction cohérente entre la voie traitée et les voies auxiliaires.

Ce traitement consiste à former la voie synthétique

$$S - \Sigma_{i=1,n}W_i\,A_i$$

expression dans laquelle :

- S est la voie à traiter (Somme ou azimut ou site),
- $A_i$ est une voie ancillaire prise comme voie auxiliaire pour le calcul,
- n est le nombre de voies ancillaires disponibles

- W$_i$ est un coefficient adaptatif calculé en temps réel pour chaque case distance-fréquence du domaine ambigu.

Le coefficient Wi est déterminé d'après la théorie de l'OLS par l'équation suivante :

$$Wi(d,f) = \frac{E\left[A_i^{*}.S\right]\Omega}{E\left[A_i^{*}.A_i\right]\Omega}$$

dans laquelle E [A*B] désigne l'intercorrélation de A et B sur la zone $\Omega$. Cette zone $\Omega$, qui correspond à une zone de terrain causant ledit fouillis, est prise autour de la case traitée, mais ne comprend pas cette case traitée, ceci afin d'éviter les perturbations dues à un éventuel écho de cible.

La zone $\Omega$ est choisie pour vérifier la propriété suivante sur les diagrammes complexes de rayonnement des antennes :

sur la zone $\Omega$, on recherche $\dfrac{G\Sigma(d,f)}{G_{Ai}(d,f)} \approx \text{Constante}$

dans laquelle :

- $G\Sigma$ est le gain de la voie traitée dans la direction du fouillis de sol définie par (d, f) dans le domaine (d, f) non ambigu, (d, f) étant la case distance-fréquence ;
- $G_{Ai}$ est le gain de la voie auxiliaire i dans la direction du fouillis de sol définie par (d,f) dans le domaine (d,f) non ambigu.

En amplitude, cette propriété est obtenue par l'emploi d'antennes ancillaires présentant un diagramme de rayonnement dont la forme est la plus proche possible de celle du lobe de réflexion, ces antennes ancillaires étant des antennes préexistantes ou bien des antennes spécifiques du procédé de l'invention. L'obtention de cette propriété en ce qui concerne la phase est réalisée de la façon décrite ci-dessus à propos de la compensation de différence de chemin optique.

Les critères de choix des voies auxiliaires de calcul en vue d'une optimisation du procédé de l'invention sont les suivants :

- une forme de diagramme de rayonnement la plus proche possible de celle des lobes de réflexion,
- présence de gain dans la direction du lobe de réflexion et absence de gain dans la direction du lobe principal, ceci afin d'éviter toute perte de niveau de puissance d'un éventuel écho de cible, et de préserver les fonctions de mesure angulaire du radar,
- un diagramme de phase présentant peu de fluctuations, ce qui conditionne la bonne stabilité (fluctuations inférieures à quelques degrés) de son centre de phase, et
- une faible ambiguïté fréquence positive/fréquence négative.

L'absence d'ambiguïté fréquence positive/fréquence négative est obtenue en limitant le gain de l'antenne ancillaire dans la direction ambiguë. On a illustré en figure 4, de façon très schématisée, un exemple d'une voie ancillaire ne présentant pas d'ambiguïté entre les fréquences négatives et les fréquences positives. Sur cette figure, on a représenté en 10 le diagramme de gain d'une voie ancillaire capable de traiter le lobe de réflexion sur le radôme d'une antenne radar, et en 11 et 12 des lignes isofréquence ambiguës relatives à un avion porteur volant suivant une trajectoire rectiligne. L'absence d'ambiguïté fréquence positive/fréquence négative est obtenue ici en limitant le gain de l'antenne ancillaire dans la direction ambiguë, ce gain étant uniforme sur l'ensemble du lobe de réflexion. La zone $\Omega$ est prise pour la même case fréquence.

En conclusion, le procédé de l'invention permet d'améliorer la détection des cibles mobiles en diminuant fortement le fouillis de sol capté par les lobes de réflexion. Dans des exemples de mise en oeuvre du procédé de l'invention, on a pu mesurer, pour un mode MFR usuel, avec une seule voie ancillaire, une diminution du fouillis (rapport de puissance du fouillis sans et avec traitement de la zone ambiguë polluée) d'environ 10 dB, ou mieux, selon les radars employés.

**Revendications**

1. Procédé d'atténuation du fouillis issu des lobes de réflexion d'une antenne radar disposée dans un radôme (1), **caractérisé en ce que** l'antenne comportant une antenne principale et une antenne ancillaire, ledit procédé consiste à déterminer la position du centre de phase de chaque voie anciliaire (5), ainsi que la position des centres de phase locaux de chaque zone angulaire du lobe de réflexion (4) du radôme (1), à modéliser ou à mémoriser ces positions, puis à compenser, dans le domaine ambigu distance/fréquence Doppler, pour chaque voie de calcul traitée, et pour chaque voie ancillaire, la différence de chemin optique entre la voie ancillaire et la voie traitée, et à générer une voie synthétique par un traitement de type OLS en effectuant une soustraction cohérente entre les signaux de la voie traitée et ceux de la voie ancillaire sur la zone du domaine ambigu distance/fréquence Doppler de chacune des voies traitées.

2. Procédé selon la revendication 1, **caractérisé en ce que** la compensation et la soustraction cohérente s'effectuent sur la zone désensibilisée des domaines ambigus considérés.

3. Procédé selon la revendication 1 ou 2, **caractérisé en ce que** les coefficients ($W_i$) de la soustraction cohérente sont calculés localement pour chaque case distance/fréquence du domaine ambigu à partir des cases adjacentes, d'après la théorie de la technique « Opposition des lobes Secondaires ».

4. Procédé selon l'une des revendications précédentes, **caractérisé en ce que** les positions des centres de phase des lobes de réflexion sont calculées selon la méthode des moindres carrés.

5. Procédé selon l'une des revendications précédentes, **caractérisé en ce qu'**il est mis en oeuvre pour des radars fonctionnant en mode à Moyenne Fréquence de Récurrence, comprise entre 10 et 80 hHz environ.

**Claims**

1. Method of reducing the clutter arising from the reflection lobes of a radar antenna placed in a radome (1), **characterized in that**, the antenna comprising a main antenna and an ancillary antenna, said method consists in determining the position of the phase centre of each ancillary channel (5) and the position of the local phase centres of each angular zone of the reflection lobe (4) of the radome (1), in modelling or storing these positions, then in compensating, in the ambiguous Doppler frequency/distance domain, in respect of each processed computation channel and of each ancillary channel, for the optical path difference between the ancillary channel and the processed channel and in generating a synthetic channel by an SLO-type processing operation, by performing a coherent subtraction between the signals of the processed channel and those of the ancillary channel, over the zone of the ambiguous Doppler frequency/distance domain of each of the processed channels.

2. Method according to Claim 1, **characterized in that** the compensation and coherent subtraction operations are carried out on the desensitized zone of the ambiguous domains in question.

3. Method according to Claim 1 or 2, **characterized in that** the coefficients ($W_i$) of the coherent subtraction are computed locally for each frequency/distance cell of the ambiguous domain on the basis of the adjacent cells, using the theory of the "Side Lobe Opposition" technique.

4. Method according to one of the preceding claims, **characterized in that** the positions of the phase centres of the reflection lobes are computed using the least squares method.

5. Method according to one of the preceding claims, **characterized in that** it is employed for radars operating in mean repetition frequency mode, between about 10 and 80 kHz.

**Patentansprüche**

1. Verfahren zur Dämpfung des von den Reflexionskeulen einer Radarantenne stammenden Störechos, die in einem Radom (1) angeordnet ist, **dadurch gekennzeichnet, dass** die Antenne eine Hauptantenne und eine Nebenantenne aufweist und das Verfahren darin besteht, die Position des Phasenzentrums jedes Nebenpfads (5) sowie die Position der lokalen Phasenzentren jeder Winkelzone der Reflexionskeule (4) des Radoms (1) zu bestimmen, diese Positionen zu modellisieren oder zu speichern, und dann in dem zweideutigen Bereich Entfernung/Dopplerfrequenz für jeden verarbeiteten Rechenpfad und für jeden Nebenpfad den Unterschied des optischen Wegs zwischen dem Nebenpfad und dem verarbeiteten Pfad zu kompensieren, und einen synthetischen Pfad durch eine Verarbeitung vom Typ OLS zu generieren, indem eine kohärente Subtraktion zwischen den Signalen des verarbeiteten Pfads und denjenigen des Nebenpfads in der Zone des zweideutigen Bereichs Entfernung/Dopplerfrequenz jedes der verarbeiteten Pfade durchgeführt wird.

2. Verfahren nach Anspruch 1, **dadurch gekennzeichnet, dass** die Kompensation und die kohärente Subtraktion in der desensibilisierten Zone der betrachteten zweideutigen Bereiche erfolgen.

3. Verfahren nach Anspruch 1 oder 2, **dadurch gekennzeichnet, dass** die Koeffizienten ($W_i$) der kohärenten Subtraktion lokal für jedes Feld Entfernung/Frequenz des zweideutigen Bereichs ausgehend von den benachbarten Feldern berechnet werden, gemäß der Theorie der Technik "Opposition der Sekundärkeulen".

4. Verfahren nach einem der vorhergehenden Ansprüche, **dadurch gekennzeichnet, dass** die Positionen der Phasenzentren der Reflexionskeulen gemäß der Methode der kleinsten Quadrate berechnet werden.

5. Verfahren nach einem der vorhergehenden Ansprüche, **dadurch gekennzeichnet, dass** es bei Radargeräten angewendet wird, die in einem Modus mit mittlerer Impulsfolgefrequenz zwischen etwa 10 und 80 hHz arbeiten.

FIG.1

FIG.2

FIG.3

FIG.4

**RÉFÉRENCES CITÉES DANS LA DESCRIPTION**

**Documents brevets cités dans la description**

- US 5163176 A

- US 5506586 A